# EUROPÄISCHE PATENTSCHRIFT

(11) **EP 1 152 932 B1**
(45) Veröffentlichungstag und Bekanntmachung des Hinweises auf die Patenterteilung: **16.06.2004**
(21) Anmeldenummer: 00912498.3
(22) Anmeldetag: 23.02.2000
(51) Int. Cl.: B60S 3/06

(54) **FAHRZEUGBEHANDLUNGSANLAGE UND BETRIEBSVERFAHREN**
VEHICLE TREATMENT SYSTEM AND OPERATING METHOD
INSTALLATION DE TRAITEMENT DE VEHICULE ET PROCEDE DE FONCTIONNEMENT

(30) Priorität: 24.02.1999 DE 29903300 U; 21.05.1999 DE 29908866 U
(43) Veröffentlichungstag der Anmeldung: 14.11.2001
(73) Patentinhaber: WashTec Holding GmbH, 86153 Augsburg (DE)
(72) Erfinder: DIETSCH, Wolfgang, D-60435 Frankfurt (DE); KLOS, Walter, D-58511 Lüdenscheid (DE)
(74) Vertreter: Rapp, Bertram
(86) Internationale Anmeldenummer: PCT/EP2000/001459
(87) Internationale Veröffentlichungsnummer: WO 2000/050278

(56) Entgegenhaltungen:
- EP-A- 0 283 446
- US-A- 4 981 523
- PATENT ABSTRACTS OF JAPAN vol. 1998, no. 05, 30. April 1998 (1998-04-30) & JP 10 001032 A (MK SEIKO CO LTD), 6. Januar 1998 (1998-01-06)
- PATENT ABSTRACTS OF JAPAN vol. 1995, no. 02, 31. März 1995 (1995-03-31) & JP 06 321067 A (DAIFUKU CO LTD), 22. November 1994 (1994-11-22)
- PATENT ABSTRACTS OF JAPAN vol. 1998, no. 14, 31. Dezember 1998 (1998-12-31) & JP 10 230821 A (MK SEIKO CO LTD), 2. September 1998 (1998-09-02)

## Beschreibung

Die Erfindung betrifft ein Verfahren zum Betrieb einer Fahrzeugbehandlungsanlage und eine Fahrzeugbehandlungsanlage nach dem Oberbegriff des Anspruchs 1 bzw. 4.

Aus der JP-A-10 001 032 ist eine gattungsgemäße Kraftfahrzeugwaschanlage bekannt, die an einem Verfahrportal angeordnete Seitenwaschbürsten und eine Horizontalwaschbürste enthält. Zur Erfassung der seitlichen Fahrzeugsilhouette sind vor den Seitenbürsten erste Detektoren vorgesehen, während an der Oberseite des Portals Kameras zur Erfassung der Silhouette von der Oberseite vorgesehen sind. Bei dieser bekannten Fahrzeugwaschanlage werden auf der Grundlage der durch die Detektoren und Kameras erfassten Daten jedoch nur die Positionen der Seitenwaschbürsten und der Horizontalwaschbürste gesteuert.

Bei einer in der JP-A-10 230 821 beschriebenen Fahrzeugwaschanlage wird eine Kameraüberwachung nur zur Überwachung des Betriebs während des Waschvorgangs verwendet. Als Einfahrhilfe ist dort eine Reifenführung zwischen zwei parallelen Schienen vorgesehen.

Aufgabe der Erfindung ist es, ein Verfahren zum Betrieb einer Fahrzeugbehandlungsanlage und eine Fahrzeugbehandlungsanlage zu schaffen, die einen verbesserten Bedienkomfort ermöglichen.

Diese Aufgabe wird durch ein Verfahren zum Betrieb einer Fahrzeugwaschanlage mit den Merkmalen des Anspruchs 1 und durch eine Fahrzeugwaschanlage mit den Merkmalen des Anspruchs 4 gelöst.

Das Kamerasystem kann für unterschiedliche Zwecke eingesetzt werden. Es können Einzelbilder oder laufende Aufnahmen von der gesamten sichtbaren Form des einfahrenden oder stehenden Fahrzeugs und gegebenenfalls auch von der umgebenden Peripherie in der Fahrzeugbehandlungsanlage aufgenommen und für die Steuerung oder Regelung von ein oder mehreren Anlagenfunktionen eingesetzt werden.

Die Aufnahmen können dabei in Verbindung mit einer geeigneten Bildauswerteeinrichtung und Steuerung nach unterschiedlichen Kriterien ausgewertet werden. Hierbei kann das Kamerasystem als Messeinrichtung ausgebildet sein, die z.B. eine Vermessung der Position und Ausrichtung des Fahrzeugs beim Einfahren und/oder in der Zielposition durchführt und die Daten an die Steuerung der Fahrzeugbehandlungsanlage leitet. Alternativ kann die Kontur und/oder Größe des Fahrzeugs erfasst und an die Steuerung der Fahrzeugbehandlungsanlage gemeldet werden.

Zum einen wird das Kamerasystem für eine Einfahrhilfe herangezogen. Es lässt sich aber auch zur Steuerung der Fahrzeugbehandlungsanlage selbst einsetzen. Es kann insbesondere in Verbindung mit einer Konturenerfassung zur Steuerung und/oder Regelung der Behandlungsprozesse dienen. Das Kamerasystem ermöglicht ferner eine lichtgesteuerten Fernbedienung der Fahrzeugbehandlungsanlage. Zudem kann das Kamerasystem für eine Anlagenüberwachung verwendet werden, wobei z.B. eine Überwachung auf etwaige Kollisionen, Fehlstellungen der Waschbürsten, Sprüh- und Trockendüsen, Anlagenstörungen von außen, Qualität der Behandlungsergebnisse etc. durchgeführt wird.

Die Einfahrhilfe gestattet es, den Fahrzeuglenker sicher und zuverlässig zu führen. Dabei erhält er über die Signaleinrichtung Lenkhinweise, mit denen er Fehlstellungen bei der Positionierung und Ausrichtung des Fahrzeuges korrigieren kann. Insbesondere kann er dadurch Schrägstellungen oder einen zu großen seitlichen Versatz gegenüber der Einfahrspur korrigieren. Mechanische Leitschienen oder dergleichen andere am Fahrzeug selbst angreifende Führungseinrichtungen sind entbehrlich. Durch den Wegfall solcher Leitschienen kann die Unfallsicherheit und auch der Komfort in der Fahrzeugwaschanlage verbessert werden.

Mittels der Fernbedienung kann Fahrzeugbehandlungsanlage aus dem Fahrzeug heraus vom Fahrzeuglenker selbst gestartet und gegebenenfalls auch gestoppt werden. Ein Startsignal kann z.B. durch ein Blinken mit der Lichthupe gegeben werden, während ein Stoppsignal durch ein zweites Blinksignal, gegebenenfalls mit einem anderen Rhythmus ausgelöst wird. Das Stoppsignal kann auch in Notfällen einen Alarm beim Anlagenbetreiber auslösen. Der Fahrzeuglenker muß bei der Fahrzeugwäsche in einer Portalwaschanlage sein Fahrzeug nicht mehr verlassen. Er kann geschützt vor Nässe, Kälte und anderen unliebsamen Außeneinflüssen im Fahrzeug sitzen bleiben. Durch den Verzicht auf ein Aus- und Einsteigen wird außerdem die Unfallgefahr minimiert. Die genannten Vorteile gelten auch für eventuelle weitere Fahrgäste.

Kamerasysteme sind besonders kostengünstig und betriebssicher. Sie arbeiten auch unter den in einer Fahrzeugwaschanlage herrschenden Umgebungsbedingungen zuverlässig und genau. Insbesondere ist der Aufwand bei Montage, Einrichtung, Wartung und Betrieb gering. Wenn nur eine Einfahrhilfe gefordert wird, genügen billige Kamerasysteme mit einer niedrigen Auflösung und geringen Anforderungen an die Rechenkapazität, die sich an den eingeschalteten Scheinwerfern des Fahrzeugs orientieren. Bessere Kamerasysteme mit höherer Auflösung erlauben die vorerwähnte Konturenerfassung mit den Steuer- und Überwachungsfunktionen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Fahrzeugbehandlungsanlage mit einer Einfahrhilfe mit einem Kamerasystem in Draufsicht,
- Figur 2:: eine Variante zu Figur 2 mit mehreren Kameras,
- Figur 3:: Variante zu Figur 2 und 3 mit beweglichen Kameras und
- Figur 4:: eine Frontansicht der Fahrzeugbehandlungsanlage gemäß Figur 3.

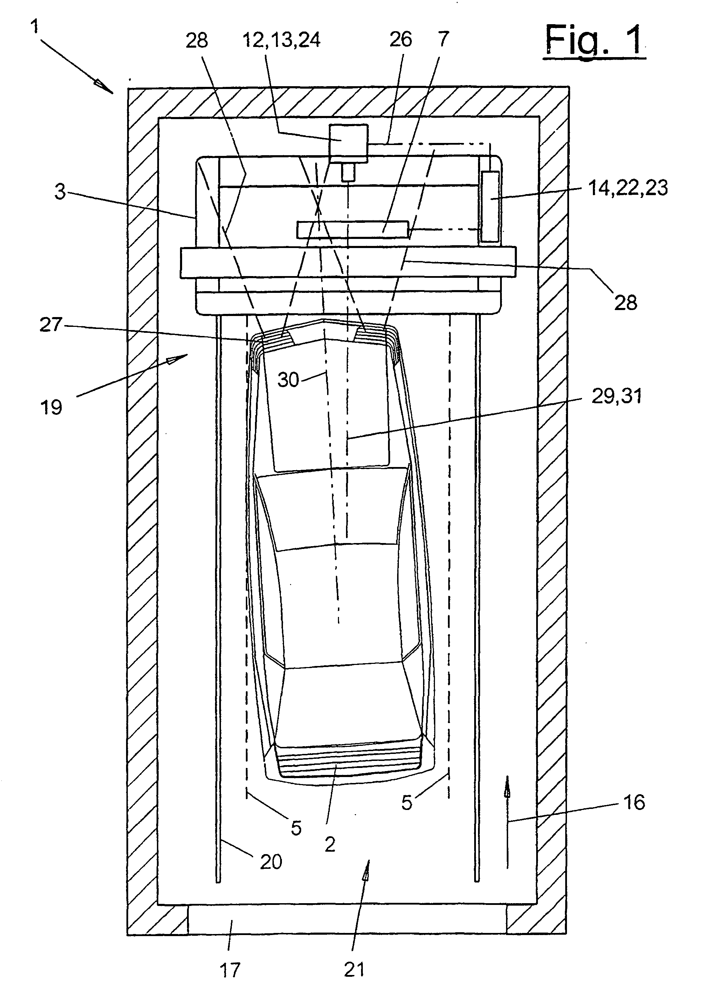

In Figur 1 bis 4 ist eine Fahrzeugbehandlungsanlage (1) schematisch dargestellt. In der gezeigten Ausführungsform ist sie als Fahrzeugwaschanlage ausgebildet. Alternativ kann es sich auch um eine Fahrzeugpolieranlage oder um eine andere beliebige Art von Fahrzeugbehandlungsanlage handeln.

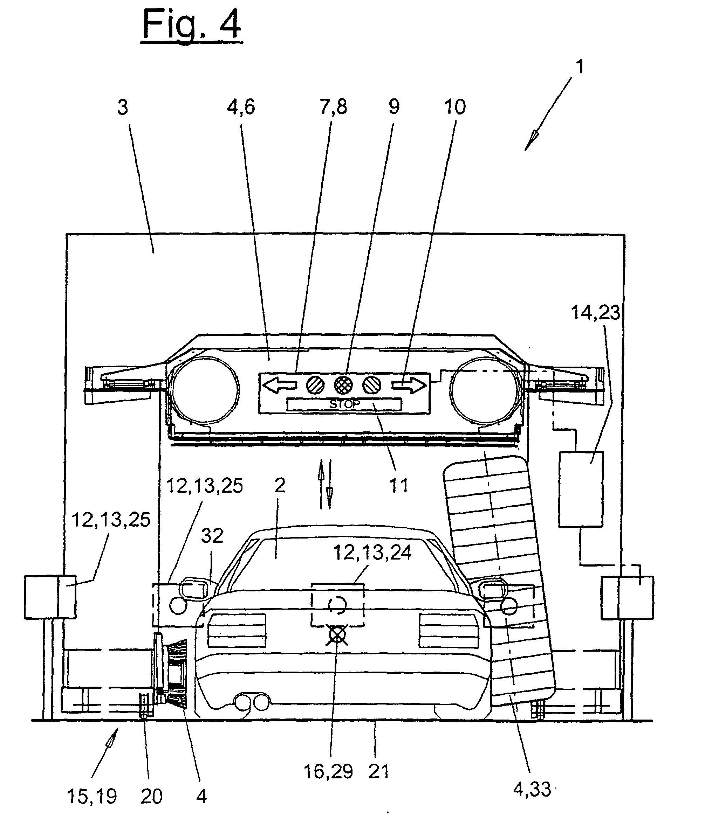

Die Fahrzeugwaschanlage (1) besteht aus ein oder mehreren Portalen (3) oder anderen Führungen, an denen unter anderem eine Wascheinrichtung (4) mit einer Betriebsmittelversorgung, eine Trockeneinrichtung sowie eine Steuerung (14) untergebracht sind. Die Wascheinrichtung (4) kann beliebig ausgebildet sein und Hochdruckdüsen, Dach- und Seitenbürsten (33) oder dergleichen andere Aggregate beinhalten. Der Übersichtlichkeit wegen sind in Figur 4 nur eine Radwaschbürste und eine Seitenbürste (33) dargestellt.

Die Trockeneinrichtung beinhaltet zumindest eine heb- und senkbare Dachtrockendüse (6). Daneben können ein oder mehrere bewegliche oder stationäre Seitendüsen vorhanden sein. Die Dachtrockendüse (6) kann alternativ auch starr angeordnet sein. In der bevorzugten Ausführungsform hat sie eine vertikale Führung im Portal (3) und einen Hubantrieb.

Die Fahrzeugwaschanlage (1) ist in der gezeigten Ausführungsform als Portalwaschanlage mit einem Einlaß (17) und gegebenenfalls einem Auslaß (18) ausgebildet. Hierbei bewegt sich das mit allen erforderlichen Aggregaten bestückte Portal (3) gegenüber dem stehenden Fahrzeug (2). Das Fahrzeug (2) wird vom Fahrzeuglenker auf einer Einfahrspur (21) in Einfahrtrichtung (16) vor bzw. unter das stehende Portal (3) gefahren. Nach der Wäsche kann das Fahrzeug (2) je nach Anlagengestaltung nach vorn durch einen Auslass (18) oder rückwärts durch den Einlass (17) die Anlage (1) verlassen.

Die Fahrzeugwaschanlage (1) kann alternativ als Tandemoder Taktanlage ausgebildet sein. Bei einer Tandemanlage sind zwei Portale vorhanden, die hintereinander aufgestellt und mit unterschiedlichen Aggregaten bestückt sind. Die Portale können sich getrennt oder gemeinsam bewegen. Bei einer Taktanlage sind ebenfalls zwei oder mehr Portale hintereinander angeordnet und durch eine bewegliche Zwischenwand in unterschiedliche Behandlungsbereiche getrennt. Der Fahrzeuglenker fährt das Fahrzeug nach Abschluß des ersten Behandlungsvorganges unter das nächste Portal. Die Fahrzeugbewegung kann auch durch eine Schleppeinrichtung erfolgen. Desgleichen sind auch Mischformen dieser Anlagentypen möglich. Grundsätzlich kann die Fahrzeugwaschanlage (1) auch als Waschstraße oder beliebig anders ausgebildet sein.

Innerhalb der Fahrzeugwaschanlage (1) ist mindestens eine optische Erfassungseinrichtung angeordnet, die das Fahrzeug berührungslos abtastet und als Kamerasystem (12) oder sog. Vision-System ausgebildet ist. Das Kamerasystem (12) besteht aus ein oder mehreren Kameras (24,25), die gemäß Figur 1 bis 3 unterschiedlich angeordnet und ausgebildet sein können. Hierbei können für eine räumliche Erfassung mehrere Kameras (24,25) zusammenwirken.

Die Kameras (24,25) haben eine große Informationsdichte und können in ihrem Sichtbereich ein vorzugsweise komplettes Bild des einfahrenden oder stehenden Fahrzeugs (2) aufnehmen. Die Aufnahmen können ein oder mehrere im wesentlichen stehende Einzelbilder oder auch laufende Bilder sein. Die Kameras (24,25) sind als analoge, vorzugsweise als digitale Kameras ausgebildet, die mittels mindestens eines CCD-Chips, CMOS-Chips oder dgl. ein flächiges oder ggf. auch räumliches Bild in Rasterform mit einer Vielzahl von genau definierten und einzeln ansteuerbaren Bildpunkten aufnehmen, welches vermessen oder auf andere Weise ausgewertet werden kann. Die Bilderfassung und Bildauswertung kann mit einer vorzugsweise hohen Taktfrequenz von z.B. 25 Bildern/sec. oder mehr durchgeführt werden.

Die Kameras (24,25) sind an einem bekannten Ort und mit einer bekannten Blickrichtung (31) positioniert. Sie blicken vorzugsweise direkt zum Fahrzeug (2) und/oder auch parallel zum Fahrzeug (2) oder am Fahrzeug (2) entlang.

Die Kameras (24,25) sind mit mindestens einer Bildauswerteeinrichtung (23) und einer Steuerung (22) verbunden. Dabei kann jede Kamera (24,25) ihre eigene und vorzugsweise integrierte Bildauswerteeinrichtung besitzen. Alternativ kann auch eine gemeinsame Bildauswerteeinrichtung (23) für mehrere Kameras (24,25) vorhanden sein. Über die Steuerung (22) des Kamerasystems (12) können die Bilddaten der einzelnen Kameras (24,25) miteinander verglichen und gemeinsam ausgewertet werden. Über die Steuerung (22) können auch evtl. Bewegungen der Kameras (24,25) gesteuert werden.

Im gezeigten Ausführungsbeispiel ist eine gemeinsame Steuerung (22) für das gesamte Kamerasystem (12) vorhanden. Alternativ können auch mehrere Einzelsteuerungen vorhanden sein. Die Steuerung(en) (22) und die Bildauswerteeinrichtung(en) (23) können miteinander kombiniert sein. Sie sind mit der Steuerung (14) der Fahrzeugbehandlungsanlage (1) verbunden. Dies kann als Verbindung von Einzelgeräten realisiert sein. Alternativ können die Geräte (22,23) auch in die Steuerung (14) integriert sein. Die Steuerungen (14,22) sind vorzugsweise als computergestützte, frei programmierbare und mit entsprechenden Programm- und Datenspeichern ausgerüstete Steuerungen ausgebildet.

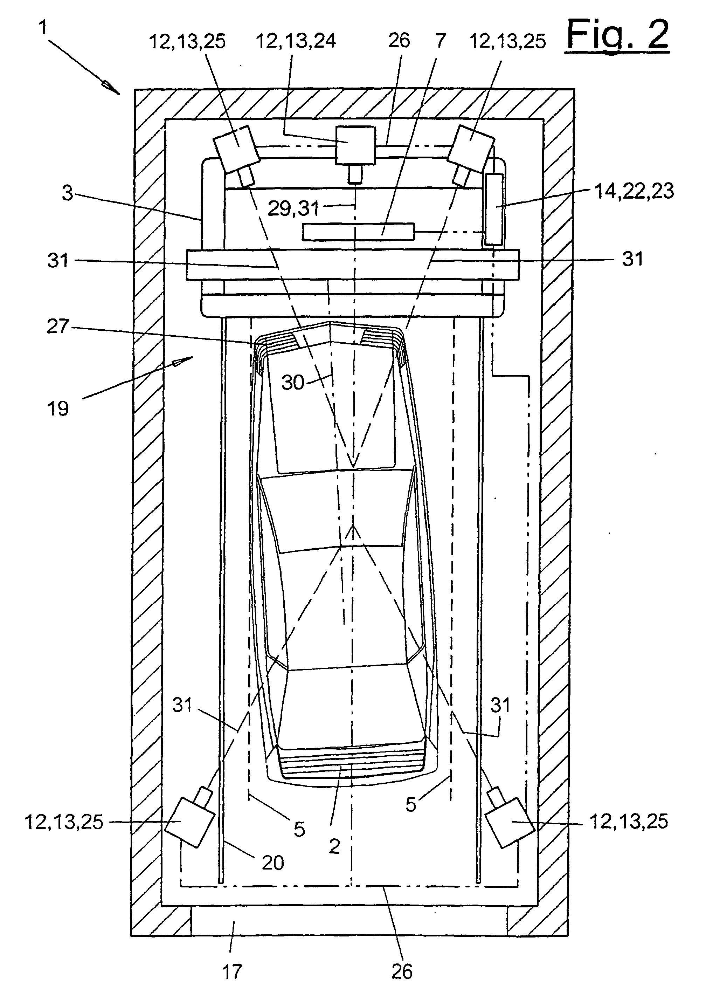

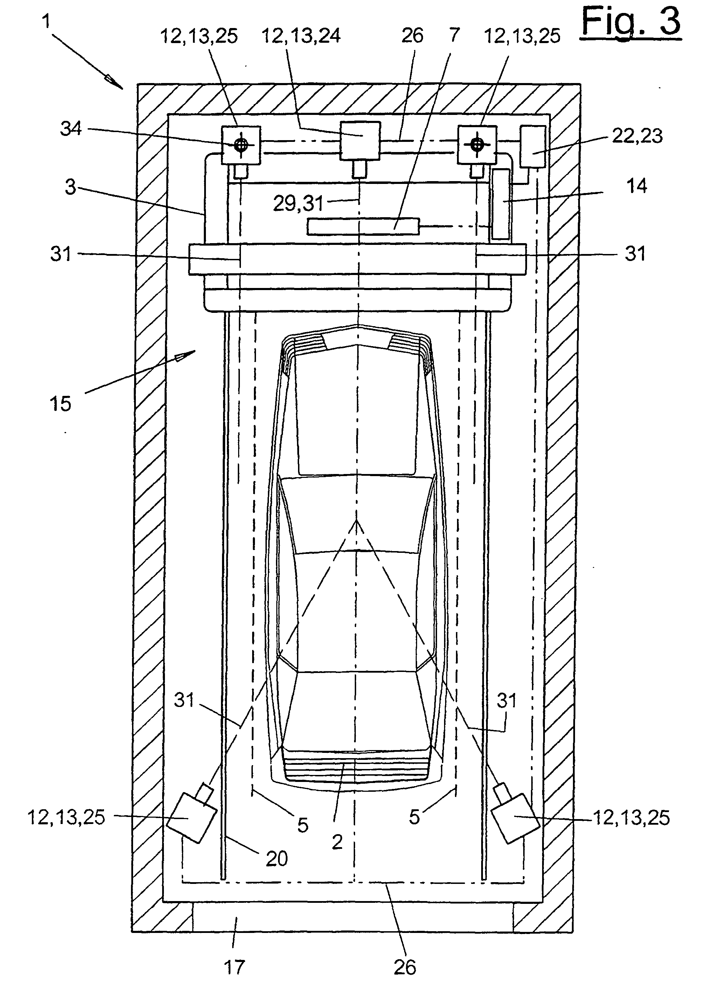

Im Ausführungsbeispiel von Figur 1 ist die einzelne Kamera (24) über eine geeignete Leitung, vorzugsweise einen Videobus (26) mit den Steuerungen bzw. Einrichtungen (14,22,23) verbunden. Im Ausführungsbeispiel von Figur 2 und 3 sind alle fünf Kameras (24,25) durch einen solchen Videobus (26) mit den Geräten (14,22,23) verbunden. Vorzugsweise ist hierbei ein einziger Videobus (26) vorhanden, der auch die einzelnen Kameras (24,25) untereinander verbindet.

Die Bildauswertung der Kamerabilder kann auf unterschiedliche Weise geschehen. Vorzugsweise ist das Kamerasystem (12) als Messeinrichtung (13) konzipiert. Hierbei werden die aufgenommenen Bilder des Fahrzeugs (2) vermessen. Hierbei können mehrere Kameras (24,25) mit unterschiedlichen Blickrichtungen (31) zusammenwirken und durch ihre Verteilung eine räumliche Vermessung ermöglichen. Die Vermessung kann dabei auf unterschiedliche Weise geschehen. Zum einen läßt sich anhand der bekannten Positionen der Kameras (24,25) feststellen, wo sich das Fahrzeug (2) innerhalb der Fahrzeugbehandlungsanlage (1) befindet. Insbesondere kann dadurch ermittelt werden, ob das Fahrzeug außermittig zur Einfahr-Ideallinie (29) steht und einen seitlichen Versatz oder ggf. auch eine Schrägstellung aufweist, wie sie in Figur 1 und 2 dargestellt ist. Das Kamerasystem (12) kann durch die in geeigneter Zahl und Position angeordneten Kameras (24,25) auch feststellen, wo die Fahrzeugposition in Axialrichtung bzw. Einfahrtrichtung (16) ist. Darüber hinaus kann aber auch die Größe und die Kontur des Fahrzeugs (2) an allen Seiten ermittelt werden. Hierüber läßt sich beispielsweise feststellen, wo sich die Räder und die anderen relevanten Fahrzeugteile, wie Motorhaube, Front- und Heckscheibe, Kofferraumdeckel, etc. befinden. Auch die Fahrzeugtypen lassen sich anhand der Konturendaten unterscheiden. Die aufgenommenen Konturen- und Größendaten des Fahrzeugs (2) lassen sich über die bekannte Position der Kameras (24,25) wiederum in Positionsdaten der Fahrzeugteile umrechnen. Hierüber weiß dann die Steuerung (14) der Fahrzeugbehandlungsanlage (1), wo sich das Fahrzeug (2) befindet, welche Fahrzeugausrichtung (30) es hat und wo sich die behandlungsrelevanten Fahrzeugteile, z.B. die Räder, die Fahrzeugspiegel (32) etc. befinden. Anhand dieser Fahrzeugdaten kann dann die Fahrzeugbehandlungsanlage (1) gesteuert werden.

Die Kameras (24,25) können außer dem Fahrzeug (2) auch die umgebende Peripherie aufnehmen und ggf. vermessen. Hierüber kann festgestellt werden, ob der Fahrweg des Portals (3) frei ist oder ob sich irgendwo Kollisionen ergeben. Ferner kann die Stellung der Aggregate der Behandlungseinrichtung (4), z.B. der Waschbürsten (33), aufgenommen und überprüft werden. Zudem können die Kameras (24,25) Hell/Dunkel-Unterschiede aufnehmen. Sie können dadurch als Empfänger für Lichtsignale vom Fahrzeug (2) zum Zwecke einer Fernbedienung oder Selbstbedienung der Fahrzeugbehandlungsanlage (1) dienen. Durch Betätigung der Lichthupe mit einem bestimmten vorgegebenen Rhythmus und durch eine kameraseitige Erkennung dieser Lichtsignale können dann mittels der Steuerung (14) Anlagenfunktionen gesteuert werden. Z.B. läßt sich die Fahrzeugbehandlungsanlage (1) vom Fahrzeuglenker aus dem Fahrzeug (2) heraus starten oder auch in anderer Weise steuern und bedienen.

Im Ausführungsbeispiel von Figur 1 ist eine einzelne Kamera (24) vorgesehen, die vorzugsweise starr angeordnet ist und die im wesentlichen in der Einfahr-Ideallinie (29) positioniert ist. Ihre Blickrichtung (31) ist auf die Einfahrspur (21) bzw. das Fahrzeug (2) gerichtet und erstreckt sich längs der Ideallinien (29). Vorzugsweise ist die Kamera (24) etwa in Höhe des Kühlergrills angeordnet. Sie befindet sich am rückwärtigen Ende der Fahrzeugbehandlungsanlage (1) und kann unter oder hinter oder direkt an dem Portal (3) angeordnet sein.

Figur 2 und 3 zeigen Varianten, in denen mehrere Kameras (24,25) vorhanden sind. Die zentrale und in der Ideallinie (29) angeordnete Kamera (24) ist die gleiche wie in Figur 1. Zusätzlich sind rund um die Einfahrspur (21) bzw. das eingefahrene Fahrzeug (2) weitere Kameras (25) positioniert. Dies können wie in Figur 2 gezeigt z.B. zwei beidseits neben der zentralen Kamera (24) angeordnete Kameras (25) sein, die jeweils mit ihren Blickrichtungen (31) schräg auf die Einfahrspur (21) bzw. das Fahrzeug (2) gerichtet sind. Alternativ oder zusätzlich können zwei weitere Kameras (25) nahe des Einlasses (17) angeordnet sein, die jeweils an den Seitenwänden oder im Eckbereich der Fahrzeugbehandlungsanlage (1) positioniert sind und die mit ihren Blickrichtungen (31) von hinten auf das Fahrzeug (2) in der Zielposition gerichtet sind.

Alternativ oder zusätzlich können auch ein oder mehrere Kameras seitlich von der Einfahrspur (21) mit einer quer gerichteten Blickrichtung positioniert sein (nicht dargestellt).

Die Kameras (24,25) können ortsfest und starr installiert sein. Alternativ oder zusätzlich können einzelne oder alle Kameras (24,25) auch ortsveränderlich über einen Schwenkarm, Schlitten oder dgl. oder in sich beweglich, z.B. dreh- oder schwenkbar, angeordnet sein. Dies kann zur Erfassung der seitlichen Form oder Höhenkontur eines Fahrzeugs beim Einfahren in die Anlage (1) vorteilhaft sein. Hierbei wird die Länge und Höhe sowie die Kontur des Fahrzeugs (2) über Motorhaube, Dach, Heckbereich und Windschutzscheiben erfaßt, gespeichert und für eine geeignete Auswertung mit den nachstehend geschilderten Möglichkeiten herangezogen. Bei beweglichen Kameras (24, 25) kann ein geeignetes Messsystem zur Erfassung der Kamerabewegungen und zur entsprechenden Auswertung bzw. Berichtigung der Kameramessdaten vorhanden sein.

Bei der Variante von Figur 3 ist zumindest eine Kamera (25) beweglich angeordnet und besitzt eine exakt steuerbare und um die Vertikale drehbare Stelleinrichtung (34) zur genauen Positionierung und/oder Ausrichtung. Figur 3 zeigt auch den Fall, dass die beiden seitlich unter dem Portal (3) angeordneten frontseitigen Kameras (25) eine Blickrichtung (31) entlang und im wesentlichen parallel zu den Seitenflächen des Fahrzeugs (2) einnehmen können.

Das Kamerasystem (12) wird zur Steuerung einer Einfahrhilfe (19) eingesetzt. Die Einfahrhilfe (19) beinhaltet eine entsprechende eigenen Steuerung oder ist mit der Steuerung (14) der Fahrzeugbehandlungsanlage (1) und mit einer Signaleinrichtung (7) mit Fahrtrichtungshinweisen (10) zur Bedienerführung des Fahrzeuglenkers verbunden. Die Einfahrhilfe (19) kann anhand der Kameradaten über die Signaleinrichtung (7) den Fahrzeuglenker in geeigneter Weise optisch und/oder akustisch führen. Dabei geben die Fahrtrichtungshinweise (10) dem Fahrzeuglenker bei Fehlstellungen (30) des Fahrzeugs Korrektur- und Lenkhilfen zur Einhaltung der meist mittigen Einfahr-Ideallinie (29) und zur korrekten Einfahrtrichtung (16) sowie zur richtigen Stop-Position am Portal (3). Darüberhinaus kann die Signaleinrichtung (7) weitere Informationen, z.B. zur aktuellen Fahrzeugposition oder zu der noch vorwärts zu fahrenden Streckenlänge etc. übermitteln. Auf mechanische Führungen oder Einfahrhilfen, insbesondere auf bodenseitige Leitschienen für die Fahrzeugräder kann dabei verzichtet werden.

Das Kamerasystem (12) erfasst die längs laufenden Störkanten (5) des Portals (3). Diese Störkanten können in beliebiger Weise entsprechend der Ausbildung des Portals (3) oder der Behandlungseinrichtungen (4,6) festgelegt werden. Wie Figur 1 verdeutlicht, verlaufen z.B. diese vertikalen Störkanten (5) mit etwas Abstand innerhalb der Waschbürsten in Ruhestellung. Gegebenenfalls können auch die seitlichen Trocknungsdüsen oder Hochdruckdüsen (nicht dargestellt) die innere vertikale Störkante und deren Lage gegenüber der Einfahrspur (21) definieren. Über den Fahrweg des Portals (3) längs der Einfahrtrichtung (16) ergibt sich eine Störkantenebene.

Mit dem Kamerasystem (12) können Schrägstellungen (30) oder ein seitlicher Versatz des Fahrzeuges (2) bereits während des Einfahrens und noch vor Erreichen der Endstellung am Portal (3) festgestellt werden. Figur 2 zeigt dies anhand einer Schrägstellung (30) des Fahrzeuges (2). Hier ragt das rechte Fahrzeugheck in die Störkantenebene (5) hinein und könnte mit dem Portal (3) oder dessen Teilen beim Waschvorgang kollidieren.

Wenn derartige Fehlpositionierungen des Fahrzeuges (2) beim Einfahren festgestellt werden, wird in der Steuerung (14) aufgrund der Bildauswertung und eines geeigneten Programmes die notwendige Korrekturhilfe ermittelt und dem Fahrzeuglenker über Fahrtrichtungshinweise (10) signalisiert. Er erhält dazu ein akustisches, optisches oder in sonstiger Weise geeignetes Signal, dass er das Lenkrad im gezeigten Ausführungsbeispiel nach rechts einschlagen soll, um wieder den seitlichen Versatz und die Schrägstellung zu berichtigen und auf die korrekte Einfahr-Ideallinie (29) zurückzufinden. Sobald die Lenkhilfe Wirkung zeigt und das Fahrzeug wieder die richtige Lage hat, wird der Korrekturhinweis aufgehoben.

Falls der Fahrzeuglenker das Fahrzeug (2) in einer falschen Position abstellt, wird durch die Steuerung (14) ein entsprechender Hinweis an den Fahrzeuglenker über die Signaleinrichtung (7) übermittelt. Außerdem kann die Steuerung (14) die Fahrzeugwaschanlage (1) sperren und den Start des Portals (3) und der Behandlungseinrichtungen (4,6) verhindern.

Mit der einzelnen Kamera (24) können bereits in der genannten Weise seitliche Fehlstellungen des Fahrzeugs (2) gegenüber der Ideallinie (29) festgestellt werden. Durch eine Speicherung und einen Vergleich der aufgenommenen Positionsdaten des Fahrzeugs (2) über den Fahrweg können auch Schrägstellungen (30) des einfahrenden Fahrzeugs (2) festgestellt werden. Durch mehrere unterschiedlich positionierte Kameras (24,25) und den Bilddatenabgleich können direkt räumliche Bilder aufgenommen und ausgewertet werden.

In einer einfachen Ausführungsform haben die Kameras (24,25) eine niedrige Auflösung und erfassen im wesentlichen nur die eingeschalteten Scheinwerfer (27) bzw. die Leuchtkegel (28) des einfahrenden Fahrzeugs (2).

Sie werden als zwei gegenüber der helleren Umgebung hervorgehobene helle Lichtpunkte erfaßt. Aus der Position der Scheinwerfer (27) kann der Mittelpunkt des Fahrzeugs errechnet und eine eventuelle Seitenabweichung von der vorgegebenen Einfahr-Ideallinie (29) bestimmt werden. Durch Speicherung und Vergleich der beim Einfahren sich verändernden Scheinwerferpositionen kann auch die Fahrtrichtung des Fahrzeugs (2) bestimmt werden. Zudem läßt sich durch die optische Erfassungseinrichtung (24,25) auch die Entfernung des Fahrzeugs (2) zum Zielpunkt am Portal (3) ermitteln. In Verbindung mit der niedrigen Auflösung bestehen geringere Anforderungen an die Rechenkapazität der Steuerung (14). Dementsprechend kann der Aufwand bei Hardware und Software gering gehalten werden.

Mit komplexeren und höher auflösenden Kameras (24,25) können auch komplexere Bilder des Fahrzeugs (2) aufgenommen und insbesondere die Ränder und andere Teile der Fahrzeugkarosserie optisch erfaßt und abgetastet werden. Diese Bilddaten lassen sich in der vorerwähnten Weise zur Auswertung von Position und Ausrichtung (30) des Fahrzeugs (2) heranziehen.

Das Kamerasystem lässt sich aber auch für die Steuerung der Fahrzeugbehandlungsanlage (1) einsetzen. Hierbei können die erfassten Konturdaten des Fahrzeugs (2) zur Steuerung der Wasch- oder Poliereinrichtung (4) und des Portals (3) herangezogen werden. Damit lassen sich Waschbürsten (33), aber insbesondere auch Hochdruck-Waschdüsen exakt und mit optimaler Bürstenanpressung bzw. optimalem Düsenabstand nach der Position und der Kontur des Fahrzeugs (2) steuern. In ähnlicher Weise können auch Auftragseinrichtungen für Wasser, Spülmittel, Schaum, Reinigungsmittel etc. und Trockendüsen im Hauben-, Fenster- und Dachbereich sowie an den Seiten des Fahrzeugs gesteuert werden. Je nach Fahrzeugtyp kann auch eine andere Konturanpassung der Wasch- oder Poliereinrichtung (4) stattfinden.

Die Bürstenstellungen lassen sich gegenüber den verschiedenen Fahrzeugformen und insbesondere bei schwierigen Fahrzeugkonturen, z.B. eingezogenen Dächern, optimieren und an die jeweilige Fahrzeugform anpassen. Hierbei kann z.B. wie in Figur 4 gezeigt eine Winkelanpassung der Seitenbürsten (33) an die seitliche Fenster- bzw. Dachneigung oder an ein schräges Fahrzeugheck erfolgen. Außer der Neigung kann man auch die Eintauchtiefe der verschiedenen Waschbürsten (33) am Fahrzeug (2) durch das Kamerasystem (12) kontrollieren und ggf. steuern bzw. regeln. Bei Frontlenkern mit einer hohen und steilen Fahrzeugfront wird die Verweildauer der Behandlungsaggregate verlängert. Desgleichen kann an den Fahrzeugrädern zur Radwäsche gestoppt werden.

Das Kamerasystem (12) erlaubt auch eine Regelung der Wasch- oder Poliereinrichtung (4) und des Portals (3) durch eine Online-Kontrolle von deren Position und Funktion im Betrieb.

Außerdem kann das Kamerasystem (12) in Verbindung mit einer Anlagenüberwachung (15) eingesetzt werden. Es ermöglicht eine visuelle Überwachung des Wasch- oder Poliervorganges für den Anlagenbetreiber durch z.B. einen Monitor, einen Aufzeichnungsgerät etc.. Eventuelle Kollisionen, unzureichende Wasch- oder Polierergebnisse etc. können hierdurch ebenfalls festgestellt und zumindest protokolliert oder gegebenenfalls auch zur Korrektur und nochmaligen Durchführung des Wasch- oder Poliervorganges ausgewertet werden.

Insbesondere können Fehlfunktionen oder Fehlstellungen der Behandlungseinrichtung (4) und speziell der Waschbürsten (33) schnell und sicher festgestellt und ggf. behoben werden. Dies ist z.B. der Fall, wenn sich eine Waschbürste (33) um Vorsprünge am Fahrzeug (2), z.B. eine Anhängerkupplung wickelt und hängen bleibt. Ein solches Blockieren kann optisch über eine ungewöhnliche Schrägstellung oder ein Einschnüren und Zusammenfallen der Waschbürste (33) festgestellt werden.

Das Kamerasystem (12) kann auch für eine Fernbedienung oder Selbstbedienung der Fahrzeugbehandlungsanlage (1) eingesetzt werden. Der Fahrer kann nach Erreichen der Soll-Stellung des Fahrzeugs (2) und der behandlungsgerechten Fahrzeugposition die Scheinwerfer (27) einschalten oder die Lichthupe betätigen. Dieses Lichtsignal wird von dem vor dem Fahrzeug (2) befindlichen Kamerasystem (12) aufgenommen und der Steuerung (14) zugeleitet. An geeigneter Stelle in der Bildauswerteeinrichtung (23) oder der Steuerung (22,14) erfolgt eine Auswertung der empfangenen Lichtsignale, wobei eine Unterscheidung gegenüber den Lichtverhältnissen in der Umgebung getroffen wird. Durch geeignete logische Vergleiche und Plausibilitätskontrollen wird zuverlässig festgestellt, ob es sich tatsächlich um ein vom Fahrzeuglenker gegebenes Lichtsignal handelt.

Wenn dies festgestellt wird, schaltet die Steuerung (14) die Fahrzeugbehandlungsanlage (1) ein und startet den Behandlungsprozeß. Die Fahrzeuginsassen können im Fahrzeug (2) beim Starten und während des Behandlungsprozesses sitzen bleiben. Nach Beendigung der Behandlung kann das Fahrzeug (2) wieder ausfahren.

Der Behandlungsprozeß und die Fahrzeugbehandlungsanlage (1) können während des Betriebs wiederum über das Kamerasystem (12) und über Lichtsignale aus dem Fahrzeug (2) gestoppt werden, falls Fehler, Gerätekollisionen oder sonstige kritische Ereignisse auftreten. Das Stoppsignal kann dazu z.B. mit einem anderen Blinkrhythmus als das Startsignal gegeben werden.

Die Signaleinrichtung (7) ist in den gezeigten Ausführungsbeispielen in der Portalöffnung unter dem Querträger untergebracht. Vorzugsweise ist sie an der Dachtrockendüse (6) angeordnet und zum Fahrzeuglenker hin gerichtet. Bei einer höhenbeweglichen Dachtrockendüse wird die Signaleinrichtung (7) über die Düsenbewegungen in den Sichtbereich des Fahrers gebracht und hieraus wieder entfernt. Alternativ kann sie aber auch am Portal (3) oder an einer anderen geeigneten Stelle der Fahrzeugbehandlungsanlage (1) angeordnet sein.

Die Signaleinrichtung (7) kann unterschiedlich ausgebildet sein. Im gezeigten Ausführungsbeispiel handelt es sich um eine schaltbare optische Anzeige (8). Diese beinhaltet z.B. eine farbige Ampel (9) mit ein oder mehreren verschiedenfarbigen Leuchten. Durch die Farbgebung rot/grün kann z.B. dem Fahrer signalisiert werden, wie weit er gegenüber dem Portal (3) noch vor fahren kann.

Die Signaleinrichtung (7) kann alternativ oder zusätzlich Fahrtrichtungshinweise (10) in Form von beleuchteten Pfeilen und/oder ein oder mehrere schaltbare Schriftfelder (11) aufweisen. Insbesondere kann die Signaleinrichtung (7) ein graphikfähiges LCD-, TFT- oder LED-Display oder sonstiges Display aufweisen. In diesen kann dem Fahrer ein beliebiger Text optisch übermittelt werden. Außer Text können auch Bilder oder Symbole signalisiert werden. Das Schriftfeld (11) ermöglicht über eine Laufschrift eine komplette Bedienerführung mit vollständigen Hinweis- oder Anweisungstexten. Es kann als Fahrtrichtungshinweis fungieren. Die übermittelten Informationen können auch einen beliebigen Inhalt haben. Außer den vorerwähnten Einfahrtshinweisen (10) können z.B. auch Informationen über das Waschangebot, den Preis, über Werbung oder dergleichen übermittelt werden.

Die Bedienerhinweise können nicht nur bei der Einfahrt und beim Abstellen des Fahrzeugs gegeben werden. Eine Informationsübermittlung ist auch während des Waschprozesses oder an dessen Ende bei der Ausfahrt möglich. Während des Waschvorgangs kann z.B. der Umfang des gewählten Waschvorgangs und der Stand der einzelnen Behandlungsvorgänge signalisiert werden. Nach erfolgter Wäsche erhält der Fahrer Ausfahrtshinweise, Werbeangebote, eine Danksagung oder dergleichen. Grundsätzlich können die von der Signaleinrichtung (7) übermittelten Hinweise beliebiger Natur sein.

Die gezeigten Ausführungsbeispiele können in verschiedener Weise abgewandelt werden. Die Kameras (24,25) können in der Zahl, Anordnung und Ausbildung variieren. Sie können insbesondere auch am Portal (3) angeordnet sein. Die Auswertung der Bilddaten kann in anderer Weise geschehen. Ferner lassen sich durch das Kamerasystem (12) auch andere Funktionen der Fahrzeugbehandlungsanlage (1) beeinflussen.

### BEZUGSZEICHENLISTE

- 1: Fahrzeugbehandlungsanlage, Fahrzeugwaschanlage
- 2: Fahrzeug
- 3: Führung, Portal
- 4: Behandlungseinrichtung, Wascheinrichtung
- 5: Störkante
- 6: Dachbehandlungsaggregat, Dachtrockendüse
- 7: Signaleinrichtung
- 8: optische Anzeige
- 9: Ampel
- 10: Fahrtrichtungshinweis, Richtungspfeil
- 11: Schriftfeld
- 12: optische Erfassungseinrichtung, Kamerasystem
- 13: Messeinrichtung
- 14: Steuerung Fahrzeugbehandlungsanlage
- 15: Anlagenüberwachung
- 16: Einfahrtrichtung
- 17: Einlaß
- 18: Auslaß
- 19: Einfahrhilfe
- 20: Laufschiene
- 21: Einfahrspur
- 22: Steuerung Kamerasystem
- 23: Bildauswerteeinrichtung
- 24: Kamera
- 25: Kamera
- 26: Videobus
- 27: Scheinwerfer
- 28: Leuchtkegel
- 29: Einfahr-Ideallinie
- 30: Fahrzeugausrichtung, Schrägstellung
- 31: Kamerarichtung, Blickrichtung
- 32: Fahrzeugspiegel
- 33: Waschbürste, Seitenbürste
- 34: Stelleinrichtung

## Patentansprüche

1. Verfahren zum Betrieb einer Fahrzeugbehandlungsanlage, insbesondere einer Fahrzeugwasch- oder polieranlage (1), mit mindestens einer Behandlungseinrichtung (4), einer Steuerung (14) und einem Kamerasystem (12) zur optischen Erfassung des Fahrzeugs (2), wobei das in die Fahrzeugbehandlungsanlage (1) einfahrende oder dort befindliche Fahrzeug (2) mit dem Kamerasystem (12) innerhalb der Fahrzeugbehandlungsanlage (1) optisch erfasst wird und wobei die Daten in die Steuerung (14) zur Steuerung oder Regelung von ein oder mehreren Anlagenfunktionen eingegeben werden, **dadurch gekennzeichnet, dass** die Position und Ausrichtung des Fahrzeugs (2) beim Einfahren in die Fahrzeugbehandlungsanlage (1) zumindest von vorne erfasst und ausgewertet wird und für die Steuerung einer Einfahrhilfe (19) herangezogen wird.

2. Verfahren nach Anspruch 1, **dadurch gekennzeichnet, dass** die Position, Ausrichtung und Kontur des in der Bearbeitungsposition stehenden Fahrzeugs (2) erfasst und ausgewertet wird und zur Steuerung der Behandlungseinrichtung (4) herangezogen wird.

3. Verfahren nach Anspruch 1 oder 2, **dadurch gekennzeichnet, dass** die Position, Ausrichtung und Kontur des in der Bearbeitungsposition stehenden Fahrzeugs (2) erfasst und ausgewertet wird und zur Steuerung einer Anlagenüberwachung (15) herangezogen wird.

4. Fahrzeugbehandlungsanlage, insbesondere Fahrzeugwasch- oder polieranlage (1), mit mindestens einer Behandlungseinrichtung (4), einer Steuerung (14) und einem Kamerasystem (12) zur optischen Erfassung des Fahrzeugs (2), wobei das Kamerasystem (12) innerhalb der Fahrzeugbehandlungsanlage (1) angeordnet ist und das in die Fahrzeugbehandlungsanlage (1) einfahrende oder dort befindliche Fahrzeug (2) erfasst, **dadurch gekennzeichnet, dass** das Kamerasystem (12) mit einer Einfahrhilfe (19) verbunden ist, wobei die Einfahrhilfe (19) eine mit der Steuerung (14) verbundene Signaleinrichtung (7) mit Fahrtrichtungshinweisen (10) aufweist.

5. Fahrzeugbehandlungsanlage nach Anspruch 4, **dadurch gekennzeichnet, dass** das Kamerasystem (12) ein oder mehrere Kameras (24, 25) aufweist, die mit Blickrichtung (31) zum Fahrzeug (2) angeordnet sind.

6. Fahrzeugbehandlungsanlage nach Anspruch 4 oder 5, **dadurch gekennzeichnet, dass** mehrere Kameras (24, 25) um das Fahrzeug (2) verteilt angeordnet sind.

7. Fahrzeugbehandlungsanlage nach einem der Ansprüche 4 bis 6, **dadurch gekennzeichnet, dass** das Kamerasystem (12) mit einer Bildauswerteeinrichtung (23) verbunden ist.

8. Fahrzeugbehandlungsanlage nach einem der Ansprüche 4 bis 7, **dadurch gekennzeichnet, dass** das Kamerasystem (12) und die Bildauswerteeinrichtung (23) als Messeinrichtung (13) zur Erfassung und Vermessung der Position, Ausrichtung und Kontur des Fahrzeugs (2) ausgebildet sind.

9. Fahrzeugbehandlungsanlage nach einem der Ansprüche 5 bis 8, **dadurch gekennzeichnet, dass** das Kamerasystem (12) und/oder die Bildauswerteeinrichtung (23) und/oder die Messeinrichtung (13) mit der Steuerung (14) der Fahrzeugbehandlungsanlage (1) verbunden ist oder sind.

10. Fahrzeugbehandlungsanlage nach einem der Ansprüche 4 bis 9, **dadurch gekennzeichnet, dass** die Kamera(s) (24, 25) mit der Bildauswerteeinrichtung (23) und/oder der Steuerung (14) über einen Videobus (26) verbunden ist oder sind.

11. Fahrzeugbehandlungsanlage nach Anspruch 10, **dadurch gekennzeichnet, dass** der Videobus mehrere Kameras (24, 25) untereinander verbindet.

12. Fahrzeugbehandlungsanlage nach einem der Ansprüche 4 bis 11, **dadurch gekennzeichnet, dass** mindestens eine Kamera (24) unter oder hinter einem Portal (3) der Fahrzeugbehandlungsanlage (1) angeordnet und im wesentlichen in der Einfahr-Ideallinie (29) mit Blickrichtung (31) zum einfahrenden oder stehenden Fahrzeug (2) positioniert ist.

13. Fahrzeugbehandlungsanlage nach einem der Ansprüche 4 bis 12, **dadurch gekennzeichnet, dass** das Kamerasystem (12) mit einer Anlagenüberwachung (15) verbunden ist.

14. Fahrzeugbehandlungsanlage nach einem der Ansprüche 4 bis 13, **dadurch gekennzeichnet, dass** zumindest eine Kamera (24, 25) eine geringe Auflösung hat und die hellen Scheinwerfer (27) des Fahrzeugs (2) erfasst und vermisst.

15. Fahrzeugbehandlungsanlage nach einem der Ansprüche 4 bis 14, **dadurch gekennzeichnet, dass** zumindest eine Kamera (24, 25) eine hohe Auflösung hat und die Kontur des Fahrzeugs (2) erfasst und vermisst.

16. Fahrzeugbehandlungsanlage nach einem der Ansprüche 4 bis 15, **dadurch gekennzeichnet, dass** zumindest eine Kamera (24, 25) beweglich angeordnet ist und eine Stelleinrichtung (34) aufweist.

## Claims

1. Method for operation of a vehicle treatment installation, in particular a vehicle washing or polishing installation (1), with at least one treatment device (4), a control device (14) and a camera system (12) for optical detection of the vehicle (2), with which the vehicle (2) being driven into the vehicle treatment installation (1) or located therein is detected optically with the camera system (12) within the vehicle treatment installation (1) and with which the data is fed into the control device (14) for control or regulation of one or more installation functions, **characterised in that** the position and alignment of the vehicle (2) while it is being driven into the vehicle treatment installation (1) is detected at least from the front and evaluated and used for control of a drive-in aid (19).

2. Method according to claim 1, **characterised in that** the position, alignment and contour of the vehicle (2) standing in the treatment position is detected and evaluated and used for control of the treatment device (4).

3. Method according to claim 1 or 2, **characterised in that** the position, alignment and contour of the vehicle (2) standing in the treatment position is detected and evaluated and used for control of an installation monitoring device (15).

4. Vehicle treatment installation, in particular vehicle washing or polishing installation (1), with at least one treatment device (4), a control device (14) and a camera system (12) for optical detection of the vehicle (2), in which the camera system (12) is arranged within the vehicle treatment installation (1) and detects the vehicle (2) being driven into the vehicle treatment installation (1) or located therein, **characterised in that** the camera system (12) is connected to a drive-in aid (19), the drive-in aid (19) exhibiting a signalling device (7) with driving direction instructions (10) which is connected to the control device (14).

5. Vehicle treatment installation according to claim 4, **characterised in that** the camera system (12) exhibits one or more cameras (24, 25) which are arranged viewing in the direction (31) of the vehicle (2).

6. Vehicle treatment installation according to claim 4 or 5, **characterised in that** a plurality of cameras (24, 25) are arranged distributed around the vehicle (2).

7. Vehicle treatment installation according to one of claims 4 to 6, **characterised in that** the camera system (12) is connected to a picture evaluating device (23).

8. Vehicle treatment installation according to one of claims 4 to 7, **characterised in that** the camera system (12) and the picture evaluating device (23) are embodied as a measuring device (13) for detection and measurement of the position, alignment and contour of the vehicle (2) .

9. Vehicle treatment installation according to one of claims 5 to 8, **characterised in that** the camera system (12) and/or the picture evaluating device (23) and/or the measuring device (13) is or are connected to the control device (14) of the vehicle treatment installation (1).

10. Vehicle treatment installation according to one of claims 4 to 9, **characterised in that** the camera or cameras (24, 25) is or are connected to the picture evaluating device (23) and/or the control device (14) through a video bus (26).

11. Vehicle treatment installation according to claim 10, **characterised in that** the video bus connects a plurality of cameras (24, 25) to one another.

12. Vehicle treatment installation according to one of claims 4 to 11, **characterised in that** at least one camera (24) is arranged under or behind a portal (3) of the vehicle treatment installation (1) and is essentially positioned in the ideal drive-in line (29) viewing in the direction (31) of the vehicle (2) which is being driven in or standing.

13. Vehicle treatment installation according to one of claims 4 to 12, **characterised in that** the camera system (12) is connected to an installation monitoring device (15) .

14. Vehicle treatment installation according to one of claims 4 to 13, **characterised in that** at least one camera (24, 25) has a low resolution and detects and measures the bright headlamps (27) of the vehicle (2).

15. Vehicle treatment installation according to one of claims 4 to 14, **characterised in that** at least one camera (24, 25) has a high resolution and detects and measures the contour of the vehicle (2).

16. Vehicle treatment installation according to one of claims 4 to 15, **characterised in that** at least one camera (24, 25) is arranged so that it can be moved and exhibits a positioning device (34).

## Revendications

1. Procédé d'exploitation d'une installation de traitement de véhicule, en particulier d'une installation de lavage ou de polissage de véhicule (1), avec au moins un dispositif de traitement (4), une commande (14) et un système de caméra (12) en vue de la couverture optique du véhicule (2), le véhicule (2), qui entre dans l'installation de traitement de véhicule (1) ou qui s'y trouve, étant détecté optiquement grâce au système de caméra (12) à l'intérieur de l'installation de traitement de véhicule (1) et les données étant introduites dans la commande (14) en vue de la commande ou de la régulation d'une ou de plusieurs fonctions de l'installation, **caractérisé en ce que** la position et l'orientation du véhicule (2), lors de l'entrée dans l'installation de traitement de véhicule (1), sont détectées et évaluées au moins par l'avant et sont sollicitées pour la commande d'une aide à l'entrée (19).

2. Procédé selon la revendication 1, **caractérisé en ce que** la position, l'orientation et le profil du véhicule (2), qui se trouve en position de manipulation, sont détectés et évalués et sont sollicités en vue de la commande du dispositif de traitement (4).

3. Procédé selon la revendication 1 ou 2, **caractérisé en ce que** la position, l'orientation et le profil du véhicule (2), qui se trouve en position de manipulation, sont détectés et évalués et sont sollicités en vue de la commande d'une surveillance de l'installation (15).

4. Installation de traitement de véhicule, en particulier installation de lavage ou de polissage de véhicule (1), avec au moins un dispositif de traitement (4), une commande (14) et un système de caméra (12) en vue de la couverture optique du véhicule (2), le système de caméra (12) étant disposé à l'intérieur de l'installation de traitement de véhicule (1) et détectant le véhicule (2), qui entre dans l'installation de traitement de véhicule (1) ou qui s'y trouve, **caractérisée en ce que** le système de caméra (12) est relié à une aide à l'entrée (19), l'aide à l'entrée (19) présentant un dispositif de signalisation (7), relié à la commande (14), avec des indicateurs de direction (10).

5. Installation de traitement de véhicule selon la revendication 4, **caractérisée en ce que** le système de caméra (12) présente une ou plusieurs caméras (24, 25), qui sont disposées avec une direction de visée (31) par rapport au véhicule (2).

6. Installation de traitement de véhicule selon la revendication 4 ou 5, **caractérisée en ce que** plusieurs caméras (24, 25) sont disposées, en étant réparties autour du véhicule (2).

7. Installation de traitement de véhicule selon l'une des revendications 4 à 6, **caractérisée en ce que** le système de caméra (12) est relié à un dispositif d'évaluation d'image (23).

8. Installation de traitement de véhicule selon l'une des revendications 4 à 7, **caractérisée en ce que** le système de caméra (12) et le dispositif d'évaluation d'image (23) sont constitués en tant que dispositif de mesure (13), en vue de la détection et de la mesure de la position, de l'orientation et du profil du véhicule (2).

9. Installation de traitement de véhicule selon l'une des revendications 5 à 8, **caractérisée en ce que** le système de caméra (12) et / ou le dispositif d'évaluation d'image (23) et / ou le dispositif de mesure (13) est ou sont relié(s) à la commande (14) de l'installation de traitement de véhicule (1).

10. Installation de traitement de véhicule selon l'une des revendications 4 à 9, **caractérisée en ce que** la / les caméra(s) (24, 25) est ou sont reliée(s) au dispositif d'évaluation d'image (23) et / ou à la commande (14), par l'intermédiaire d'un bus vidéo (26).

11. Installation de traitement de véhicule selon la revendication 10, **caractérisée en ce que** le bus vidéo relie plusieurs caméras (24, 25) entre elles.

12. Installation de traitement de véhicule selon l'une des revendications 4 à 11, **caractérisée en ce qu'**au moins une caméra (24) est disposée sous ou derrière un portique (3) de l'installation de traitement de véhicule (1) et est positionnée essentiellement dans la ligne théorique d'entrée (29), avec direction de visée (31), par rapport au véhicule (2) qui entre ou qui est immobile.

13. Installation de traitement de véhicule selon l'une des revendications 4 à 12, **caractérisée en ce que** le système de caméra (12) est relié à une surveillance d'installation (15).

14. Installation de traitement de véhicule selon l'une des revendications 4 à 13, **caractérisée en ce qu'**au moins une caméra (24, 25) possède une faible résolution et détecte et mesure les phares allumés (27) du véhicule (2).

15. Installation de traitement de véhicule selon l'une des revendications 4 à 14, **caractérisée en ce qu'**au moins une caméra (24, 25) possède une haute résolution et détecte et mesure le profil du véhicule (2).

16. Installation de traitement de véhicule selon l'une des revendications 4 à 15, **caractérisée en ce qu'**au moins une caméra (24, 25) est disposée de manière mobile et présente un dispositif de réglage (34).
